# EUROPÄISCHE PATENTANMELDUNG

(11) **EP 2 278 165 A2**
(43) Veröffentlichungstag der Anmeldung: **26.01.2011**
(21) Anmeldenummer: 10167279.8
(22) Anmeldetag: 25.06.2010
(51) Int. Cl.: F04C 11/00, F04C 15/06

(54) **Drehkolbenpumpe mit Winkelgetriebe**

(30) Priorität: 01.07.2009 DE 202009009093 U
(71) Anmelder: Hugo Vogelsang Maschinenbau GmbH, 49632 Essen (DE)
(72) Erfinder: Krampe, Paul, 49632 Essen (DE); Deyen, Heinrich, 49688 Lastrup (DE)
(74) Vertreter: Birken, Lars

(57) **Zusammenfassung**

Offenbart wird eine Drehkolbenpumpe zur Förderung von in der Landwirtschaft anfallenden feststoffbeladenen Fluiden, bei der sich der geförderte Fluidvolumenstrom unterschiedlichen Betriebsarten anpasst. Weiterhin offenbart werden ein Verfahren zur Wartung der offenbarten Drehkolbenpumpe sowie ein Verfahren zum Betrieb eines Tankwagens mit einer derartigen Drehkolbenpumpe. Für eine verbesserte Selbstansaugfunktion ist die Drehkolbenpumpe vorzugsweise für eine vertikale Lagerung der Drehkolben ausgestaltet, wobei ein Winkelgetriebe vorgesehen ist. Dabei sind die Drehkolben in einem ober- bzw. unterseitigen Deckel gelagert, wobei die Achsen der Drehkolben vertikal ausgerichtet sind. Die Drehkolben können vertikal über einen der Deckel entnommen und gewartet werden, ohne dass weitere Pumpenbauteile vom Pumpengehäuse demontiert werden müssen. Die Drehkolben können auch zusammen mit dem Winkelgetriebe über einen der Deckel als zusammenhängendes Pumpenbauteil demontiert werden.

## Beschreibung

Die Erfindung betrifft eine Drehkolbenpumpe für einen Tankwagen, insbesondere für in der Landwirtschaft anfallende feststoffbeladene Fluide, aufweisend einen mit einer horizontal verlaufenden Gelenkwelle eines Schleppfahrzeuges verbindbaren, um eine in Einbaulage horizontal verlaufende Achse drehbaren Antriebsflansch, mindestens ein Paar zusammenwirkender Drehkolben, von denen jedes Paar in einem Pumpenraum angeordnet ist, der/die von einem Pumpengehäuse umschlossen ist/sind, wobei jedes Paar mit dem Antriebsflansch zur Übertragung eines Drehmoments gekoppelt ist, sowie an jedem Pumpenraum ausgebildete erste und zweite Öffnungen im Pumpengehäuse, die mit dem jeweiligen Pumpenraum in Fluidkommunikation stehen.

Solche Drehkolbenpumpen werden beispielsweise zur Förderung von in der Landwirtschaft anfallenden feststoffbeladenen Fluiden vorgesehen. Die Drehkolbenpumpe übernimmt dabei z.B. die Aufgabe, einen Tank eines Tankwagens mit Fluid zu befüllen, oder das Fluid aus dem Tank eines Tankwagens zu fördern. Dabei wird die Drehkolbenpumpe z.B. über eine Gelenkwelle eines Schleppfahrzeugs, die als horizontal verlaufende Nebenabtriebswelle vorgesehen ist, angetrieben. Eine bevorzugte Einbaulage für die Drehkolbenpumpe liegt in diesem Fall zwischen Schleppfahrzeug und Tank, beispielsweise im Bereich einer Zugdeichsel eines Tankwagens.

Eine Nebenabtriebswelle eines Schleppfahrzeugs weist üblicherweise eine Betriebsdrehzahl auf, die von der Motorleistung des Schleppfahrzeugs abhängt. Meist kann diese Drehzahl nur in Abhängigkeit von der Motorleistung eingestellt werden, d.h. die Drehzahl der Nebenabtriebswelle ist meist proportional zur Motordrehzahl. Auch die Förderleistung einer Pumpe ist in einem weiten Drehzahlbereich proportional zur Drehzahl der Pumpe.

Um den verschiedenen Betriebsarten von Drehkolbenpumpen gerecht zu werden, insbesondere der Betriebsart zum Befüllen eines Tanks und der Betriebsart zum Ausbringen von Fluid aus dem Tank, z.B. am Verwendungsort, ist es vor allem beim Ausbringen bei üblicherweise hoher Motorleistung des Schleppfahrzeugs von Nutzen, wenn die Drehzahl der Nebenabtriebswelle eines Schleppfahrzeugs nicht im Verhältnis 1:1 übertragen wird, da dies eine zu hohe Fördermenge bzw. zu hohe Pumpendrehzahl mit sich bringen kann. Zum Senken der Drehzahl wird bevorzugt ein Reduziergetriebe zwischen der Nebenabtriebswelle und dem Antriebsflansch der Drehkolbenpumpe eingesetzt. Allerdings weist diese Lösung den Nachteil auf, dass der Motor des Schleppfahrzeugs auf einer unwirtschaftlich hohen Drehzahl betrieben werden muss, wenn eine an die Nebenabtriebswelle gekoppelte Drehkolbenpumpe mit einem hohen Fördervolumenstrom betrieben werden soll.

Aufgrund der häufig stark abrasiven Wirkungen der in der Landwirtschaft geförderten Fluide muss die Drehkolbenpumpe in regelmäßigen Zeitabständen gewartet werden. Das Wartungsintervall hängt von der Drehzahl ab, mit der die Drehkolben der Pumpe betrieben werden, aber z.B. auch von der Art des Fluids, d.h. von seiner abrasiven Aggressivität, die durch seinen Feststoffanteil bzw. seine Feststoffart beeinflusst wird. In Fällen besonderer Belastung, z.B. besonderer Belastung der Drehkolben bei zähen, faserigen oder besonders konsistenten Feststoffen, oder besonderer Belastung bei häufig hoher Betriebsdrehzahl ist eine Wartung im Wochen- oder Monatsrhythmus erforderlich.

Aus der DE 202 13 879 U1 ist bekannt, das Pumpengehäuse einer Kreiselpumpe an einem Tankwagen in einer horizontalen Achsanordnung anzuordnen. Eine solche Ausgestaltung ermöglicht eine gute Zugänglichkeit für Wartungszwecke und einen konstruktiv vereinfachten Antrieb mittels einer üblicherweise horizontal verlaufenden Nebenabtriebswelle eines Schleppers.

Aus der WO 2007/026109 A1 ist bekannt, zur Wartung einer Drehkolbenpumpe bei Demontage der Drehkolben eine Abdeckplatte loszuschrauben und daraufhin die Drehkolben einzeln zu entnehmen, um zu den beiden Antriebsachsen zu gelangen, auf denen die Drehkolben im Betriebszustand gelagert sind. Dabei wird das Pumpengehäuse ohne Abdeckplatte weitgehend freigelegt, d.h., das Fluid kann vollständig am tiefsten Punkt des Pumpengehäuses aus dem Pumpengehäuse entweichen. Hierdurch wird eine weitestgehend kontrollierte Entleerung des Pumpengehäuses im Zuge eines Wartungsvorgangs ermöglicht. Zudem kann in einfacher Weise ein einzelnes, einer Wartung bedürftiges Bauelement gezielt entnommen und wieder eingebaut werden.

Aus der DE 10 2007 054 544 A1 ist eine Drehkolbenpumpe für den Einsatz an einem Tankwagen bekannt, bei der die Drehkolben zusammen mit einer Abdeckplatte bzw. zusammen mit den Antriebsachsen demontiert werden können, indem das Pumpengehäuse geteilt ausgeführt ist. Das Pumpengehäuse wird durch Demontage der Abdeckplatte freigelegt, wobei das Fluid am tiefsten Punkt des Pumpengehäuses entweicht.

Problematisch an den vorbekannten Lösungen ist, dass selbst bei einer teilweisen Demontage der Pumpe oftmals eine Wiederinbetriebnahme nur mit erheblichem Aufwand möglich ist. So muss oftmals das Fluid mittels eines Hilfsaggregats oder manueller Verrichtungen der Pumpe wieder zugeführt wird, um erst dann den Fördervorgang durch die Pumpe selbst in Gang setzen zu können.

Eine erste Aufgabe der vorliegenden Erfindung ist es, eine hinsichtlich des zu fördernden Fluidvolumenstroms flexibel und wirtschaftlicher als bekannte Lösungen einsetzbare Drehkolbenpumpe bereitzustellen.

Ein hierbei bestehendes Ziel der Erfindung ist es, eine Drehkolbenpumpe bereitzustellen, die nach einer Wartung wieder besser anläuft als bekannte Drehkolbenpumpen.

Schließlich ist es ein weiteres Ziel der Erfindung, eine Drehkolbenpumpe bereitzustellen, deren Wartung auf einfachere Art und Weise durchführbar ist.

Die voranstehende Aufgabe wird durch eine Drehkolbenpumpe der eingangs genannten Art gelöst, bei der jeder Drehkolben in Einbaulage der Drehkolbenpumpe um eine vertikal ausgerichtete Drehachse drehbar im Pumpengehäuse gelagert ist, wobei die Drehachse der Drehkolben eines Paares parallel und beabstandet zueinander verlaufen und zur Übertragung des Drehmoments von dem Antriebsflansch auf die Drehkolben ein Winkelgetriebe bereitgestellt ist.

Mit der erfindungsgemäßen Drehkolbenpumpe wird einerseits eine bessere Wartungszugänglichkeit erreicht, da eine Entnahme der Drehkolben in vertikaler Richtung ermöglicht wird.

Eine erfindungsgemäße Drehkolbenpumpe für einen Tankwagen, insbesondere für in der Landwirtschaft anfallende feststoffbeladene Fluide weist einen Antriebsflansch auf, welcher mit einer horizontal verlaufenden Gelenkwelle eines Schleppfahrzeuges verbindbar ist, und welcher um eine in Einbaulage horizontal verlaufende Achse drehbar ist. Ferner weist eine erfindungsgemäße Drehkolbenpumpe mindestens ein Paar zusammenwirkender Drehkolben auf, von denen jedes Paar in einem Pumpenraum angeordnet ist, der/die von einem Pumpengehäuse umschlossen ist/sind, und jedes Paar mit dem Antriebsflansch zur Übertragung eines Drehmoments solcherart gekoppelt ist, dass sich die Drehkolben eines Drehkolbenpaares in entgegengesetzten Richtungen drehen. Die Drehkolben fördern das Fluid durch den Pumpenraum von einer ersten zu einer zweiten Anschlussöffnung, oder bei entsprechend umgekehrtem Drehsinn von der zweiten zur ersten Anschlussöffnung. Erfindungsgemäß können Drehkolben je zwei oder mehr Flügel aufweisen, bevorzugt jedoch vier Flügel. Auch bei mehreren Pumpenräumen sind die Drehkolben erfindungsgemäß gekoppelt, wobei ein Betrieb der Drehkolben eines ersten Pumpenraums den Betrieb der Drehkolben eines anderen Pumpenraums nicht notwendigerweise bedingen muss.

Die Erfindung zeichnet sich ferner dadurch aus, dass die Drehkolben in Einbaulage der Drehkolbenpumpe um vertikal ausgerichtete Achsen drehbar im Pumpengehäuse gelagert sein können, um die Wartung zu erleichtern, wobei aber auch die Lagerung bei horizontal ausgerichteten Achsen möglich ist und in gewissen Fällen von Nutzen sein kann. Als Einbaulage ist dabei z.B. eine Lage der Drehkolbenpumpe in unmittelbarer Nähe zu einem Tank zu verstehen, wobei die Pumpe strömungstechnisch zwischen einer mit dem Tank verbundenen Rohrleitung und einer vom Tank wegführenden Rohrleitung angeordnet ist. Der Tank kann auf einem Tankwagen angeordnet sein, wobei die Einbaulage vorzugsweise im Bereich der Deichsel des Tankwagens liegt. Vertikal ausgerichtete Achsen der Drehkolben schneiden damit eine horizontale Ebene im Wesentlichen orthogonal. Ist die Drehkolbenpumpe im Bereich der Deichsel eines Tankwagens eingebaut, so wird eine solche horizontale Ebene z.B. von den Streben der Deichsel selbst bzw. vom Rahmen des Tankwagens, auf dem der Tank ruht, aufgespannt.

Zur Übertragung des Drehmoments von dem Antriebsflansch auf die Drehkolben kann ein Winkelgetriebe bereitgestellt sein, wobei als Winkelgetriebe ein Getriebe aufgefasst wird, durch weiches die Richtung der zu übertragenden Kraft bzw. des zu übertragenden Drehmoments umgelenkt wird, also die Verlaufsrichtung der Eingangswelle von der Verlaufsrichtung der Ausgangswelle abweicht, insbesondere um 90° verschieden ist. Als Winkelgetriebe kann z.B. ein Kegelradgetriebe aufgefasst werden, wobei ein Kegelradgetriebe die zu übertragende Kraft bzw. das zu übertragende Drehmoment z.B. typischerweise um 90 ° umlenkt.

Dabei liegt der Erfindung die Erkenntnis zugrunde, dass bei Wartung bzw. Austausch der Drehkolben das Pumpengehäuse nicht weitgehend trocken gelegt werden sollte, das Pumpengehäuse dabei aber weiterhin so angeordnet sein muss, dass die Drehkolben in Einbaulage für Wartungszwecke zugänglich bleiben. Die Maßnahmen, die für ausreichende Zugänglichkeit zu treffen sind, sind abhängig davon, ob die mit einem Antrieb verbundenen Antriebsachsen in Position verbleiben, so dass der Antrieb selbst nicht demontiert werden muss, oder ob auch der Antrieb entkuppelt und positioniert werden muss, damit die Drehkolben zusammen mit den Antriebsachsen demontiert werden können. Damit gab der Aufbau einer Drehkolbenpumpe bisher vor, ob bzw. inwieweit das Pumpengehäuse sowohl von vorn als auch von hinten zugänglich bleiben muss, wobei der Platz vor und/oder hinter dem Pumpengehäuse ausreichen musste, um die Drehkolben und/oder die Antriebswellen zu demontieren, entsprechend einem Platz von mindestens einer Pumpenlänge. Für den Fall, dass zusätzlich ein Getriebe zwischen dem Antrieb und den Antriebsachsen der Drehkolbenpumpe vorzusehen war, wurde dieses Getriebe zur Wartung der Drehkolben üblicherweise auch demontiert.

Bei der erfindungsgemäßen Drehkolbenpumpe kann bei vertikal ausgerichteten Drehachsen der Drehkolben das Pumpengehäuse zugänglich gemacht und die Drehkolben entnommen werden, ohne dass das Fluid vollständig oder zu bedeutenden Teilen aus dem Pumpengehäuse entweicht. Damit ergibt sich durch die vertikale Ausrichtung der Achsen der Drehkolben eine verbesserte Selbstansaugfunktion, z.B. beim auf eine Wartung erfolgenden Anlauf-Vorgang der Drehkolbenpumpe. In Verbindung mit dem Winkelgetriebe kann die Drehkolbenpumpe mit vertikal ausgerichteten Achsen der Drehkolben an eine horizontal verlaufende Gelenkwelle eines Schleppfahrzeuges gekoppelt werden.

Zudem können die Anschlüsse der Drehkolbenpumpe durch die vertikale Ausrichtung der Drehkolbenachsen solcherart angeordnet werden, dass ein Rest des Fluids stets in den Anschlussbereichen verbleibt, auch bei längerem Stillstand der Pumpe oder nach Teildemontage, sodass die Selbstabdichtung durch das Fluid und damit das Selbstansaugvermögen verbessert wird.

Durch die vertikale Ausrichtung der Achsen der Drehkolben bleibt eine Wartung auf einfache Art und Weise möglich. Dabei hat sich überraschend gezeigt, dass bei der erfindungsgemäßen Lösung gegenüber dem Stand der Technik Bauraum eingespart werden kann, da nicht der für die Entnahme der Drehkolben seitlich bzw. vor oder hinter dem Pumpengehäuse benötigte Freiraum vorgesehen sein muss. Stattdessen können die Drehkolben bei der Erfindung in vertikaler Richtung demontiert und montiert werden. Auch können die Drehkolben zusammen mit dem Winkelgetriebe als zusammenhängendes Pumpenelement demontiert oder montiert werden. Seitlich ist somit kein zusätzlicher Platz erforderlich, so dass die Drehkolbenpumpe unabhängig von ihrem Aufbau angeordnet werden kann, z.B. unmittelbar angrenzend an den Tank eines Tankwagens. Platz oberhalb der Drehkolbenpumpe ist üblicherweise ausreichend vorhanden, so dass durch die vertikale Ausrichtung der Achsen der Drehkolben auch die Einbaulage unter weniger strengen Randbedingungen als bisher gewählt werden kann.

Besonders bei mehreren Paaren zusammenwirkender Drehkolben, d.h. bei mehreren Pumpenräumen ist eine vertikale Ausrichtung der Achsen der Drehkolben von großem Nutzen. Denn bei mehreren Pumpenräumen würde eine horizontale Ausrichtung je nach Bauform eine Zugänglichkeit sowohl vor als auch hinter der Drehkolbenpumpe erfordern, d.h. man wäre noch stärker in der Wahl der Einbaulage eingeschränkt als bei einem einzelnen Pumpenraum. Auch kann die verbesserte Selbstansaugfunktion gerade bei mehreren Pumpenräumen den Anfahrvorgang der Pumpe nach erfolgter Wartung wesentlich erleichtern.

Zudem hat sich überraschend gezeigt, dass durch die oftmals ohnehin bestehende Notwendigkeit eines Winkelgetriebes bei der Erfindung eine kompakte Bauweise auch bei Anpassung der Pumpe an die oftmals erhöhte Leistung an der Nebenabtriebswelle moderner Schlepper erzielt werden kann. Oftmals wird die erhöhte Leistung durch eine Drehzahlerhöhung bereitgestellt, was jedoch zu erhöhtem Verschleiß, unzulässiger Erwärmung und grundsätzlichen Auslegungsproblemen bei Drehkolbenpumpen führen kann. Die erfindungsgemäße Lösung ermöglicht es hierbei, die Drehzahl im Winkelgetriebe selbst zu reduzieren und dadurch eine Drehkolbenpumpe mit hoher Leistung durch Nutzung hoher Drehmomente bereitzustellen.

Die Selbstansaugfunktion wird ferner verbessert, wenn mindestens saugseitig oder druckseitig ein benachbart zu den Öffnungen der Pumpenräume angeordnetes Fluidspeichervolumen vorgesehen wird, vorzugsweise aber sowohl saug- als auch druckseitig. Das saugseitig bzw. das druckseitig vorgesehene Fluidspeichervolumen können über Anschlussöffnungen an das Pumpengehäuse gekoppelt werden. In diesen Fluidspeichervolumina kann zusätzliches Fluid während einer Wartung zurückgehalten werden. Das Fluid aus dem oder den Fluidspeichervolumen/Fluidspeichervolumina kann nach einer Wartung den Pumpenraum zumindest zu bedeutenden Teilen fluten, weshalb der Pumpenraum auch dann, wenn nach einer Wartung Fluid aus dem Pumpenraum entwichen ist, beim Anlaufen bereits zu einem bedeutenden Teil mit Fluid geflutet ist. Dabei hat das druckseitig vorliegende Fluid den Vorteil, dass es nicht durch die Förderbewegung der Pumpe unmittelbar aus dem Bereich der Pumpe weggefördert wird, sondern durch Nachfließen auch nach den ersten Umdrehungen noch eine den Anlaufvorgang unterstützende Abdichtwirkung im Pumpenraum bewirken kann. Das saugseitig bereitgestellte Fluidspeichervolumen stellt sicher, dass die Pumpe im Anlaufvorgang über ausreichend Fluid für den Fördervorgang verfügt, so dass durch Zufluss von der Saugseite in die Pumpe saugseitig ein Unterdruck aufgebaut werden kann. Das Selbstansaugvermögen wird durch diese Fluidspeichervolumina, saugseitig und/oder druckseitig, im Vergleich zu bekannten Pumpen bei einem vollständig oder teilweise trockengefallenen Pumpenraum deutlich verbessert.

Als Fluidspeichervolumen kann dabei ein zwischen dem Pumpengehäuse und der zu- bzw. abgehenden Rohrleitung angeordnetes durchströmtes Bauteil aufgefasst werden. Ein Fluidspeichervolumen schafft zusätzliches Volumen. Ein Fluidspeichervolumen kann z.B. zwischen eine Anschlussöffnung des Pumpengehäuses und den Flansch einer Rohrleitung eingesetzt werden. Fluidspeichervolumina können Fluid auf unterschiedliche Art und Weise speichern, wobei ein Zurückhalten des Fluids z.B. auch hydromechanisch, elektrisch oder pneumatisch unterstützt werden kann. Die erfindungsgemäßen Fiuidspeichervolumina können beliebiger Geometrie sein, insbesondere einer Geometrie, die für eine jeweilige Anwendung bzw, ein jeweiliges Fluid geeignet ist. Die Fluidspeichervolumina sind z.B. kastenartig mit gegenüberliegenden, im Wesentlichen parallelen Seitenflächen, d.h. im Wesentlichen quaderförmig. Die Selbstansaugfähigkeit bzw. die Sicherheit, den Pumpenraum nach einer Wartung vollständig mit Fluid fluten zu können, nimmt mit dem Volumen der Fluidspeichervolumina zu.

Ferner weisen die Fluidspeichervolumina einen Ein- bzw. Ausströmbereich auf, an welchen jeweils eine Rohrleitung gekoppelt ist, über die Fluid zu dem Pumpenraum bzw. aus dem Pumpenraum gefördert wird. Der Ein- bzw. Ausströmbereich ist vorzugsweise an einer Seitenfläche eines Fluidspeichervolumens angeordnet, welche gegenüber der in Schwerkraftrichtung unten liegenden Seitenfläche liegt, also an einer oberen Seitenfläche bzw. an der in Schwerkraftrichtung oben liegenden oberen Seite eines jeweiligen Fluidspeichervolumens. Dadurch wird ein Ablaufen des Fluids über die Rohrleitung bzw. die Rohrleitungen erschwert und im Wesentlichen unterbunden, so dass Fluid in den Fluidspeichervolumina verbleibt.

Das Pumpengehäuse weist vorzugsweise einen oberseitigen und einen unterseitigen Flansch auf, wobei die Flansche identische Abmessungen haben, sowohl in Bezug auf ihre Geometrie als auch in Bezug auf Lage, Art und Größe von Dichtungsmitteln und Befestigungsmitteln, wie beispielsweise Durchführungen oder Bohrungen für Schrauben. Durch identische Abmessungen wird gewährleistet, dass die Dichtungsmittel und die Befestigungsmittel der Deckel bzw. Flansche zueinander kompatibel sind. Die Flansche am Pumpengehäuse dienen dazu, jeweils einen oberseitigen bzw. einen unterseitigen Deckel an das Pumpengehäuse koppeln zu können, wobei es auch möglich ist, den unterseitigen Deckel an den oberseitigen Flansch zu koppeln und vice versa. Die beiderseitige Montagemöglichkeit auf der Ober- und Unterseite des Pumpengehäuses wird durch die identischen Flanschabmessungen gewährleistet. Ferner übernehmen die Flansche Funktionen wie z.B. das Abdichten des Pumpengehäuses oder das Übertragen von auf die Deckel wirkenden Lagerkräften auf das Pumpengehäuse.

Die Drehkolben sind vorzugsweise in beiden Deckeln gelagert, d.h., die Achsen der Drehkolben schneiden den oberseitigen und den unterseitigen Deckel. Das Winkelgetriebe wird an einem der Deckel befestigt, wobei der Deckel, an den das Winkelgetriebe befestigt wird, als antriebsseitiger Deckel bezeichnet werden kann. Wie erwähnt, ist ein antriebsseitiger Deckel ausgebildet, um an den oberen oder an den unteren Flansch gekoppelt zu werden. Jeder Drehkolben ist z.B. über eine durch den antriebsseitigen Deckel ragende Welle mit dem Winkelgetriebe gekoppelt. Das z.B. von der Gelenkwelle eines Schleppfahrzeuges angelegte Drehmoment wird in diesem Fall über das Winkelgetriebe an der durch den antriebsseitigen Deckel gebildeten Schnittstelle über die durch den antriebsseitigen Deckel ragenden Wellen auf die Drehkolben übertragen.

Dadurch, dass die Achsen der Drehkolben vertikal ausgerichtet sind, können die Drehkolben vertikal demontiert werden, d.h. vertikal aus dem Pumpenraum entnommen werden. Dabei können die Drehkolben vorzugsweise vertikal nach oben entnommen werden, wobei vertikal nach oben im Wesentlichen als eine Richtung entgegen der Schwerkraftrichtung aufgefasst werden kann. Die Drehkolben können auch dann vertikal nach oben entnommen werden, wenn das Winkelgetriebe und der antriebsseitige Deckel an den oberseitigen Flansch gekoppelt sind. Damit können die Drehkolben zur Wartung immer nach oben entnommen werden, unabhängig davon, ob das Winkelgetriebe am oberseitigen oder am unterseitigen Deckel befestigt ist. Diese Flexibilität hinsichtlich Wartung wird u. a. dadurch gewährleistet, dass die Drehkolben in den Deckeln gelagert sind. So können bei einer Wartung das Pumpengehäuse, die zum Pumpengehäuse führenden bzw. vom Pumpengehäuse wegführenden Rohrleitungen und die Fluidspeichervolumina montiert bleiben.

Die von z.B. einer Gelenkwelle eines Schleppfahrzeugs einbringbare Leistung übersteigt üblicherweise weit die von einer Drehkolbenpumpe aufnehmbare Leistung, wobei auch die Drehzahl einer Gelenkwelle die für Drehkolbenpumpen geeignete Drehzahl deutlich übersteigen kann. Wünschenswert ist es, eine Drehkolbenpumpe bei für die Drehkolbenpumpe optimaler Drehzahl zu betreiben, auch vor dem Ziel langer Wartungs-Intervalle. Vorzugsweise ist das Winkelgetriebe also als Reduziergetriebe ausgestaltet, also als ein Getriebe, das die Drehzahl einer Gelenkwelle untersetzen kann.

Es kommt vor, dass beim Befüllvorgang des Tanks die Gelenkwelle nur mit halber Drehzahl betrieben werden braucht. Damit ist es ferner von Vorteil, wenn das Reduziergetriebe als umschaltbares Getriebe ausgeführt ist, so dass die von z.B. einer Gelenkwelle einbringbare Leistung auch ohne Untersetzung übertragen werden kann.

Als Reduziergetriebe im Sinne der vorliegenden Erfindung ist ein Getriebe zu verstehen, das von einem Betriebszustand zur Übertragung einer Drehzahl im Verhältnis 1:1 abweicht und in einem Betriebszustand zur Reduzierung des Drehzahlverhältnisses von Ausgang zu Eingang betrieben werden kann, wobei ein solches Getriebe beispielsweise auch umgeschaltet werden kann. Umschaltbar im Sinne der Erfindung kann zusätzlich oder alternativ auch eine Umkehr der Drehrichtung der Drehkolben in der Drehkolbenpumpen bezeichnen, um so eine Drehkolbenpumpe sowohl zum Befüllen als auch zum Entleeren eines Tanks einzusetzen, ohne Ventile schalten zu müssen bzw. ohne Rohrleitungen redundant ausführen zu müssen. Die Art des Umschalten kann händisch oder automatisch sein, wobei automatisches Umschalten eine elektrische oder hydraulische oder auch andere Art der Umschaltung bedeuten kann. Dabei ist auch eine übersetzte Übertragung nicht ausgeschlossen.

Mit einem umschaltbaren Reduziergetriebe kann die Drehkolbenpumpe mit reduzierter Drehzahl gegenüber der Motordrehzahl des Schlepperfahrzeugs sein, was insbesondere dann erforderlich ist, wenn der Schleppermotor mit hoher Drehzahl läuft, da die Drehkolbenpumpe in der Regel nicht für solche hohen Drehzahlen ausgelegt werden kann.

Die eingangs erläuterte oder zuvor beschriebene Drehkolbenpumpe kann weiter vorzugsweise einen ersten und einen zweiten Pumpenraum aufweisen, wobei in jedem Pumpenraum ein entsprechend erstes und zweites Paar von Drehkolben angeordnet ist, und die Paare mechanisch miteinander gekoppelt sind. Vorzugsweise sind der erste und zweite Pumpenraum dabei benachbart zueinander angeordnet.

Bei dieser Ausgestaltung weist jeder Pumpenraum zwei zusammenwirkende Drehkolben auf, die in einem gemeinsamen oder jeweils einem, umschließenden Pumpengehäuse angeordnet sind. Durch die Bereitstellung von zwei Pumpenräumen kann die Drehkolbenpumpe in mehreren Betriebsarten eingesetzt werden, z.B. für ein Einleiten beim Befüllen des Tanks im Parallelbetrieb beider Pumpenräume (wie beim Ansaugen aus einer Vorgrube oder einem sonstigen Behälter), oder für ein Ausbringen des Fluids am Verwendungsort in Einzeldurchströmung einer Pumpenkammer oder Seriendurchströmung beider Pumpenkammern. So kann bei der erstgenannten Betriebsart die für einen hohen Volumenstrom erforderliche Pumpendrehzahl reduziert werden und bei der zweiten Betriebsart der geförderte Volumenstrom auch bei hoher Pumpendrehzahl niedrig gehalten werden. Zwecks besserer Durchmischung des Fluids im Tank, insbesondere bei feststoffbeladenem Fluid, kann in einer Betriebsart auch eine Kammer solcherart geschaltet werden, dass sie Fluid durch den Tank zirkuliert.

Der erforderliche Fluidvolumenstrom kann erfindungsgemäß auch bei für ein Schleppfahrzeug günstigeren Motorleistungen gefördert werden, insbesondere bei der Betriebsart zum Befüllen eines Tanks bei gegenüber der höchstmöglichen Motorleistung des Schleppfahrzeugs deutlich niedrigerer Motorleistung. Dies ist erfindungsgemäß auch möglich, ohne dass ein Getriebe zwischen dem Antriebsflansch und den Drehkolben vorgesehen wird.

Ferner kann erfindungsgemäß während des Ausbringens von Fluid auch Fluid in einen Tank, aus dem das auszubringende Fluid entnommen wird, zurückgeleitet werden. Dadurch wird ein Durchmischen bzw. Rühren des Tankinhalts möglich, entsprechend einer Umwälzung während des Ausbringens, was eine homogene Zusammensetzung des ausgebrachten Fluids gewährleistet.

Neben einer guten Durchmischung des Fluids im Tank ergibt sich also dank eines zweiten Pumpenraums als Vorteil, dass sich das Verhältnis der Pumpendrehzahl zum Fluidvolumenstrom an die unterschiedlichen Einsatzzwecke der Drehkolbenpumpe anpassen lässt. Dieser Vorteil besteht unabhängig davon, ob eine Vorrichtung zur Reduzierung der Drehzahl einer Nebenabtriebswelle vorgesehen ist, z.B. in Form eines als Reduziergetriebe ausgestalteten Winkelgetriebes.

In einigen Anwendungsfällen ist es vorteilhaft, wenn der zweite Pumpenraum ein kleineres Volumen aufweist als der erste Pumpenraum. Hierdurch wird über den ersten Pumpenraum bei gleicher Drehzahl ein größerer Fluidvolumenstrom gefördert wird als über den zweiten Pumpenraum. Somit kann zum Befüllen des Tanks bei niedriger Drehzahl parallel über den ersten und den zweiten Pumpenraum ein hoher Volumenstrom gefördert werden, wobei dank niedrigerer Drehzahl der Drehkolbenpumpe weniger Kavitation auftritt. Ferner kann bei niedrigerer Drehzahl der Motor des Schleppfahrzeugs in einem wirtschaftlichen Bereich betrieben werden und die Geräuschentwicklung des Motors und/oder der Drehkolbenpumpe selbst gesenkt werden, und/oder die Lebensdauer der Drehkolbenpumpe, z.B. der der Drehkolben, erhöht werden. Beim Ausbringen des Fluids am auf dem Feld kann die Motorleistung eines Schleppfahrzeugs bis zur vollen Motorleistung gesteigert werden, ohne dass der ausgebrachte Fluidvolumenstrom zu hoch wird, indem das auzubringende Fluid nur über einen der beiden Pumpenräume oder beide Pumpenräume in Reihe gefördert wird.

Diese Ausgestaltung ermöglicht es insbesondere, auf ein schaltbares Reduziergetriebe zu verzichten, ohne Flexibilität in Bezug auf den Fluidvolumenstrom in Abhängigkeit der Drehzahl, z.B. einer Nebenabtriebswelle eines Schleppfahrzeugs, zu verlieren.

Zudem kann der geförderte Fluidvolumenstrom durch die Drehkolbenpumpe aufgezweigt werden, d.h. über einen gewissen Anteil des Fluidvolumenstroms kann anders verfügt werden als über einen restlichen Anteil des Fluidvolumenstroms. Dies gewährleistet Flexibilität hinsichtlich des zu fördernden Fluidvolumenstroms. Es hat sich gezeigt, dass heute eingesetzte Schleppfahrzeuge über eine Nebenabtriebswelle ein ausreichend hohes Drehmoment bereitstellen, um einer Drehkolbenpumpe auch bei niedrigerer Drehzahl der Nebenabtriebswelle die erforderliche Leistung zuführen zu können.

Der zweite Pumpenraum kann kleiner als der erste Pumpenraum sein, um eine kleinere Förderleistung als der erste Pumpenraum aufzuweisen. In diesem Fall wird über den ersten Pumpenraum ein größerer Fluidvolumenstrom gefördert als über den zweiten Pumpenraum.

Weiterhin ist es bevorzugt, wenn der erste und zweite Pumpenraum jeweils eine erste Öffnung aufweisen, die miteinander in Fluidkommunikation stehen und ausgebildet sind, um mit einer ersten Rohrleitung verbunden zu werden, der erste Pumpenraum einen zweite Öffnung aufweist, die ausgebildet ist, um mit einer zweiten Rohrleitung verbunden zu werden, und der zweite Pumpenraum eine zweite Öffnung aufweist, der ausgebildet ist, um mit einer dritten Rohrleitung verbunden zu werden. Mit dieser Ausgestaltung wird der gemeinsame Bezug von Fluid für beide Pumpenräume und ein Aufteilung und aufgeteilte Förderung des Fluids in zwei Volumenströme ermöglicht.

Insbesondere ist es bevorzugt, wenn der zweite Pumpenraum dazu ausgebildet ist, einen Teil des von der Drehkolbenpumpe zu fördernden Fluidvolumenstroms vom ersten Pumpenraum über den zweite Pumpenraum und über die dritte Rohrleitung (91) zu fördern

Noch weiter ist es bevorzugt, wenn die Drehachse eines Drehkolbens des Drehkolbenpaares des ersten Pumpenraums koaxial zu der Drehachse eines Drehkolbens des Drehkolbenpaares des zweiten Pumpenraums liegt und vorzugsweise die Drehachse des anderen Drehkolbens des Drehkolbenpaares des ersten Pumpenraums koaxial zu der Drehachse des anderen Drehkolbens des Drehkolbenpaares des zweiten Pumpenraums liegt. Mit dieser Ausgestaltung wird eine mechanisch robuste und zugleich fertigungstechnisch einfache und wartungsfreundliche Anordnung und Antriebsweise der Drehkolben ermöglicht. Insbesondere können zwei Paare von Drehkolben hierdurch auf insgesamt zwei Achsen betrieben werden.

Ein weiterer Aspekt der Erfindung ist ein Tankwagen mit einer Drehkolbenpumpe der zuvor erläuterten Bauweise, der vorzugsweise eine Deichsel aufweist, in deren Bereich die Drehkolbenpumpe angeordnet ist und mit dem Tank des Tankwagens in Fluidverbindung steht zum Befüllen des Tanks über eine Ansaugleitung und zum Ausbringen von Fluid aus dem Tank über eine Ausbringleitung.

Dabei kann vorzugsweise bei Verwendung einer Drehkolbenpumpe mit zwei Pumpenräumen durch Schaltung zumindest eines Ventils in einer ersten Ventilstellung eine Austrittsöffnung des ersten Pumpenraums in Fluidkommunikation mit dem Tank stehen und in einer zweiten Ventilstellung die Austrittsöffnung des ersten Pumpenraums mit einer Rohrleitung zur Ausbringung des Fluids stehen, und weiter vorzugsweise eine Austrittsöffnung des zweiten Pumpenraums in Fluidkommunikation mit dem Tank stehen. Diese Ausgestaltung ermöglicht einen Betrieb mit hohem oder niedrigem Volumenförderstrom bei gleichbleibender Drehzahl indem die Pumpenräume parallel oder einzeln geschaltet durchströmt werden.

Dabei ist es insbesondere weiter bevorzugt, wenn in den für den bestimmungsgemäßen Einsatz der Drehkolbenpumpe erforderlichen Fluidleitungen schaltbare Ventile oder Rückschlagventile solcherart angeordnet sind, dass in einer ersten Ventilstellung eine Ansaugleitung mit den Einlassöffnungen des ersten und zweiten Pumpenraums in Fluidverbindung steht und die Auslassöffnungen des ersten und zweiten Pumpenraums in Fluidverbindungen mit dem Tank stehen, um Fluid bei einer ersten Drehrichtung der Drehkolben der Drehkolbenpumpe von der Ansaugleitung in den Tank zu fördern, und dass in einer zweiten Ventilstellung der Tank über den ersten Pumpenraum mit einer Rohrleitung zur Ausbringung des Fluids in Fluidverbindung steht und der Tank mit dem zweiten Pumpenraum in einem Fluidkreislauf steht zum Ausbringen des Fluids aus dem Tank und gleichzeitigem Umwälzen des Fluids in dem Tank bei einer gegebenfalls von der ersten abweichenden Drehrichtung der Drehkolben der Drehkolbenpumpe. Durch eine solche Ventilanordnung kann die Drehkolbenpumpe in zwei bestimmten Betriebszuständen betrieben werden, einerseits zum Fördern eines hohen Volumenstroms bei niedriger Pumpendrehzahl in den Tank und andererseits zum Fördern eines niedrigen Volumenstroms bei gleicher oder sogar erhöhter Drehzahl aus dem Tank.

Hierdurch kann die Pumpe an die typischen Einsatzzwecke und die dann für einen wirtschaftlichen Betrieb des Schleppermotors angepasst werden. Die Ventilschaltung kann dabei so ausgebildet sein, dass für die Einstellung der beiden Betriebszustände eine Umkehr der Drehrichtung der Drehkolbenpumpe erforderlich ist oder nicht.

Anhand der in den Figuren gezeigten Ausführungsbeispiele wird die Erfindung näher erläutert, insbesondere auch die Wartung der Drehkolben, die auf solche Art und Weise durchgeführt werden kann, dass die Drehkolbenpumpe nach erfolgter Wartung dank verbesserter Selbstansaugfunktion wieder gut anlaufen kann.
Fig. 1 zeigt eine erfindungsgemäße Drehkolbenpumpe im betriebsbereiten Zustand, wobei das Winkelgetriebe unterhalb des Pumpengehäuses angeordnet ist.
Fig. 2 zeigt eine erfindungsgemäße Drehkolbenpumpe gem. Figur 1 mit demontiertem oberseitigem Deckel sowie demontierten Drehkolben, wobei das Winkelgetriebe unterhalb des Pumpengehäuses angeordnet ist.
Fig. 3 zeigt eine erfindungsgemäße Drehkolbenpumpe im betriebsbereiten Zustand, wobei das Winkelgetriebe oberhalb des Pumpengehäuses angeordnet ist.
Fig. 4 zeigt eine erfindungsgemäße Drehkolbenpumpe mit demontiertem oberseitigen Deckel, demontierten Drehkolben sowie demontiertem Winkelgetriebe, wobei das Winkelgetriebe für eine Anordnung oberhalb des Pumpengehäuses vorgesehen ist.
Fig. 5 zeigt in einer Draufsicht auf einen Tankwagen eine erfindungsgemäße Drehkolbenpumpe, die anstelle eines einzelnen Pumpenraums einen ersten und einen zweiten Pumpenraum aufweist.

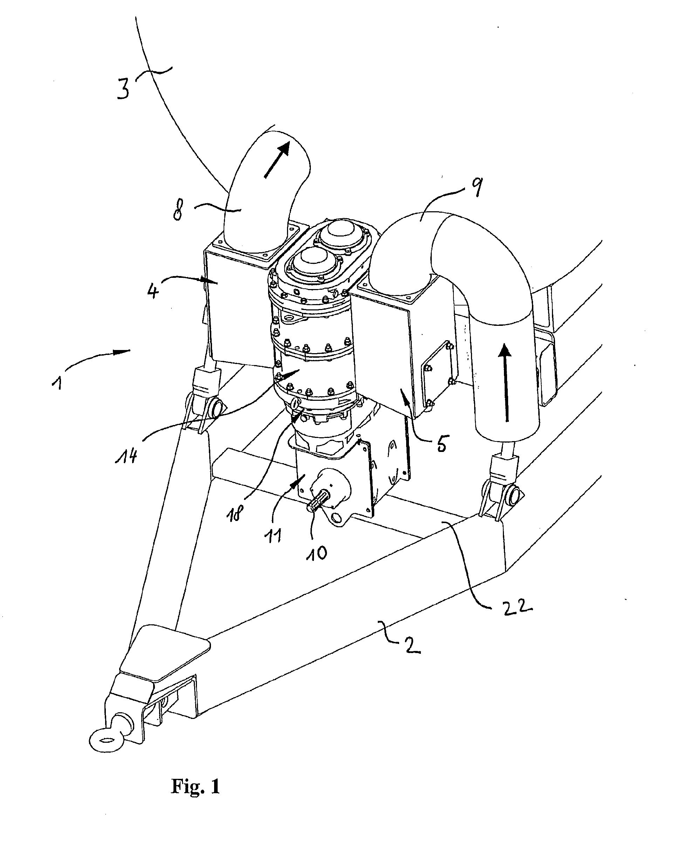

Die in der Figur 1 dargestellte erfindungsgemäße Drehkolbenpumpe 1 weist ein am unterseitigen Deckel 18 angeordnetes Winkelgetriebe 11 auf. Ferner sind zwei quaderförmige Fluidspeichervolumina 4, 5 am Pumpengehäuse 14 vorgesehen. Eine erste mit dem Tank 3 verbindbare Rohrleitung 8 und eine zweite Rohrleitung 9 stehen über die Fluidspeichervolumina 4, 5 mit dem Pumpengehäuse 14 in Verbindung. Über den Antriebsflansch 10 am Winkelgetriebe 11 kann eine Kraft bzw. ein Drehmoment zur Übertragung auf die Drehkolben (nicht dargestellt) eingeleitet werden. Über die Pfeile auf den Rohrleitungen 8, 9 ist die Förderrichtung des Fluids beim Befüllen des Tanks 3 angedeutet. Das Winkelgetriebe 11 ist in etwa in Höhe der Zugdeichsel 2 montiert und wird durch diese bzw. durch ein mechanisches Schild, z.B. in Form einer Querstrebe 22, gegenüber dem Boden, z.B. gegenüber einem Steine oder Unebenheiten aufweisenden Acker etwas geschützt.

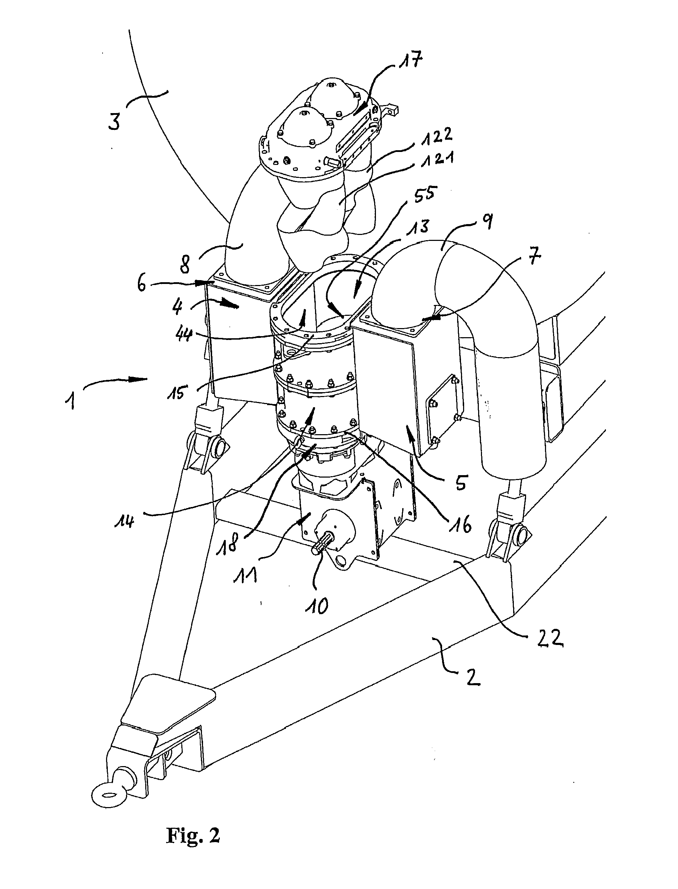

In der Figur 2 ist die Drehkolbenpumpe 1 aus Figur 1 dargestellt, insbesondere bei demontierten Drehkolben 121, 122. Die Drehkolben 121, 122 sind vertikal nach oben aus dem Pumpengehäuse 14 heraus genommen dargestellt, wobei die Drehkolben 121, 122 an den oberseitigen Deckel 11 gekoppelt bleiben können. Das Pumpengehäuse 14 ist lediglich an seiner oberen Seite geöffnet. Das Fluid (nicht dargestellt) verbleibt hierdurch im Wesentlichen im Pumpenraum 13.

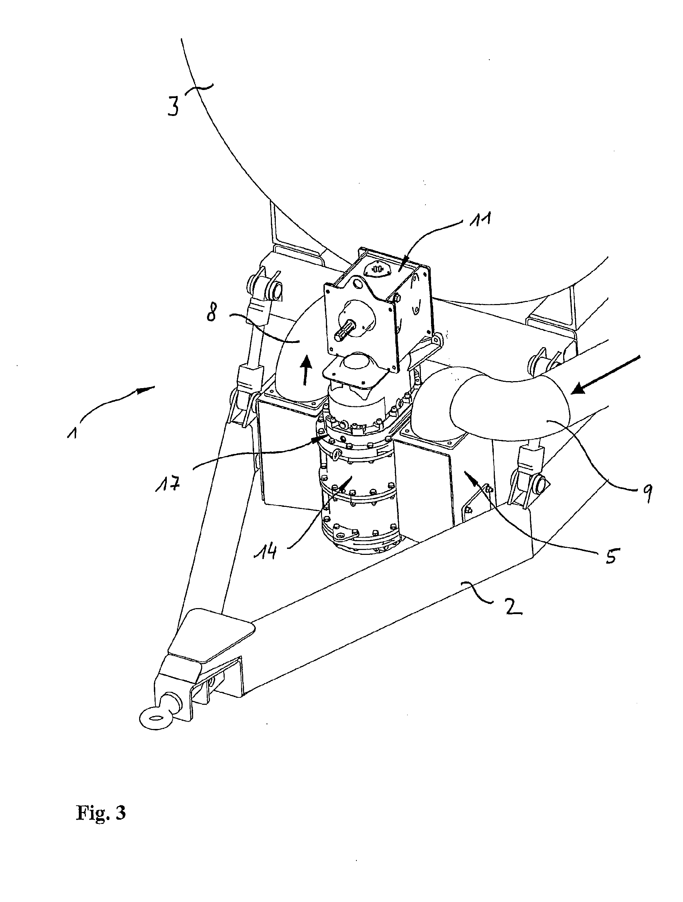

Die in der Figur 3 dargestellte erfindungsgemäß Drehkolbenpumpe 1 weist ein am oberseitigen Deckel 17 angeordnetes Winkelgetriebe 11 auf, wobei das Pumpengehäuse 14 in etwa auf Höhe der Zugdeichsel 2 montiert werden kann, also in etwa um die Höhe des Winkelgetriebes tiefer als beim in den Figuren 1 und 2 gezeigten Ausführungsbeispiel. Dabei wird das Pumpengehäuse durch ein mechanisches Schild, z.B. in Form einer Querstrebe (nicht dargestellt), gegenüber einem Steine oder Unebenheiten aufweisenden Acker geschützt. Durch die tiefere Anordnung ist es leicht möglich, die mit dem Tank 3 verbindbare erste Rohrleitung 8 an den tiefsten Punkt des Tanks 3 zu koppeln, so dass der Tank 3 leicht im Wesentlichen vollständig entleert werden kann. Ferner wird der Differenzdruck bzw. die Saughöhe herabgesetzt, der bzw. die beim Selbstansaugvorgang überwunden werden muss, so dass der Selbstansaugvorgang weniger Zeit erfordert. Bei einem kürzeren Selbstansaugvorgang können auch aufgrund kürzerer Trockenlaufzeiten die Wartungsintervalle verlängert werden. Ferner wird dadurch, dass die zweite Rohrleitung 9 im Wesentlichen horizontal ausgerichtet zum Fluidspeichervolumen 5 geführt werden kann, die Gefahr vermindert, dass Fluid über die zweite Rohrleitung 9 das Fluidspeichervolumen 5 verlässt.

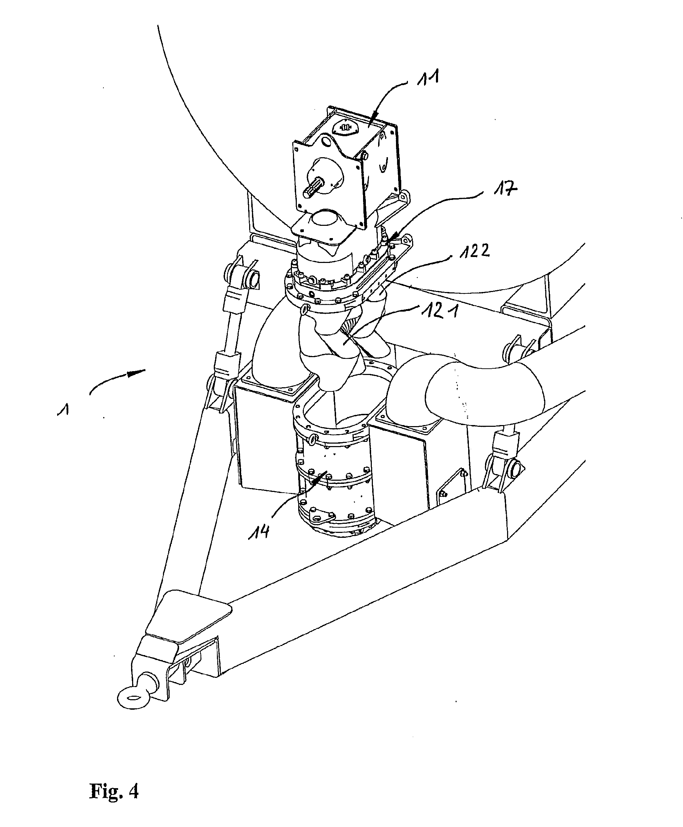

In Figur 4 ist die Drehkolbenpumpe 1 aus Figur 3 bei demontiertem Winkelgetriebe 11, demontiertem oberseitigem Deckel 17 und demontierten Drehkolben 121, 122 dargestellt. Bei dieser Anordnung des Winkelgetriebes 11 können bei der Wartung alle drehenden und damit erhöhtem Verschleiß ausgesetzten Pumpenteile zusammen als einzelnes Pumpenelement aus dem Pumpengehäuse 14 vertikal nach oben entnommen werden. Zur Entnahme kann ein Hebezeug, z.B. ein hydraulisch betätigter Hebel oder ein Gabelstapler dienen. Zur Wartung muss dabei für eine Entnahme aller drei Pumpenteile lediglich der oberseitige Deckel 17 von dem Pumpengehäuse 14 gelöst werden. Dies bedeutet zum einen Zeiteinsparung, zum anderen verbesserte Zugänglichkeit, und nicht zuletzt auch vereinfachte Handhabung und weitgehend sauberes Arbeiten. Weder tritt Fluid ungehindert aus dem Pumpengehäuse aus, noch besteht die Gefahr, dass Pumpenbauteile oder auch nur z.B. Schrauben in ausgetretenes Fluid fallen oder mit ausgetretenem oder austretendem Fluid vermengt werden.

Dadurch, dass das Winkelgetriebe 11, der oberseitige Deckel 17 und die Drehkolben 121, 122 vertikal nach oben entnommen werden können, kann auch die Flanschverbindung zwischen dem oberseitigen Deckel 17 und dem Pumpengehäuse derart ausgeführt werden, dass die Befestigungsmittel für diese Flanschverbindung von oben vertikal nach oben demontierbar sind, also z.B. Schrauben, die aus einer Gewindebohrung ausgeschraubt werden können.

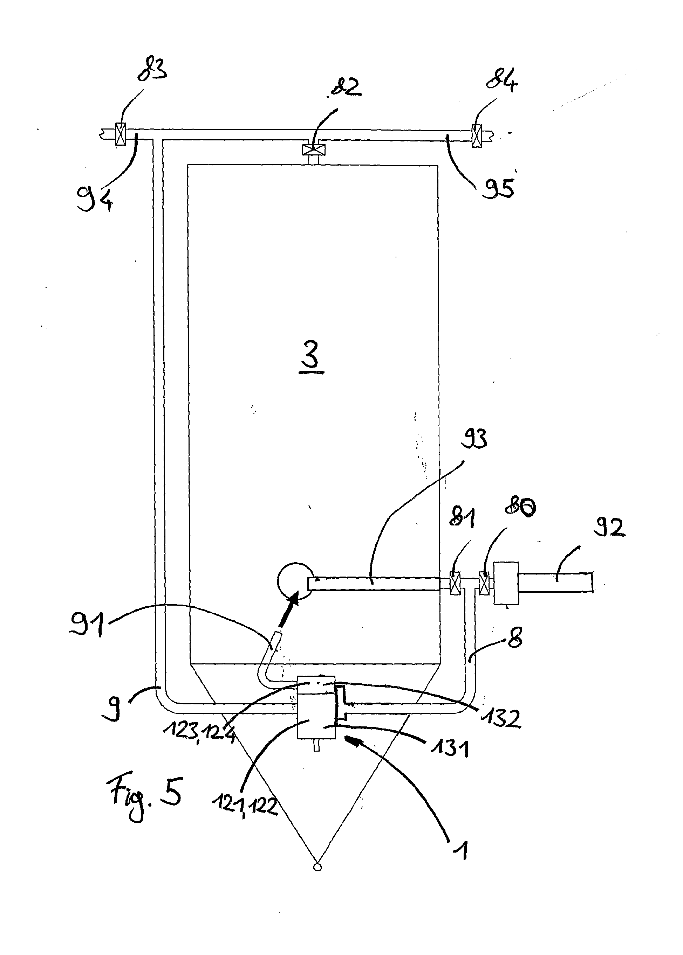

Die in der Figur 5 dargestellte erfindungsgemäße Drehkolbenpumpe 1 ist schematisch so dargestellt, dass die Drehkolben in Einbaulage der Drehkolbenpumpe um eine horizontal ausgerichtete Achse drehbar im Pumpengehäuse im jeweiligen Pumpenraum gelagert sind wobei eine Anordnung bei vertikal ausgerichteten Achsen demgegenüber auch möglich ist und die zuvor erläuterten Vorteile vertikaler Ausrichtung mit sich bringt.. Die Drehkolbenpumpe 1 weist einen ersten und einen zweiten Pumpenraum 131; 132 auf, wobei die Drehkolben 121, 122; 123, 124 in Einbaulage der Drehkolbenpumpe um horizontal ausgerichtete Achsen gelagert sind. Die Drehkolben 121, 122; 123, 124 können um horizontal oder vertikal ausgerichtete Achsen gelagert sein. In der Figur 5 ist beispielhaft die Anordnung bei horizontal ausgerichteten Achsen dargestellt. In Einbaulage ist dabei der erste Pumpenraum 131 z.B. über einen ersten Anschluss mit einer ersten Rohrleitung 8 verbunden und über einen zweiten Anschluss mit einer zweiten Rohrleitung 9 verbunden. Der zweite Pumpenraum 132 ist in Einbaulage mit der ersten Rohrleitung 8 und über einen Anschluss mit einer dritten Rohrleitung 91 verbunden. Der zweite Pumpenraum 132 ist dazu ausgebildet, einen Teil des von der Drehkolbenpumpe 1 zu fördernden Fluidvolumenstroms über den zweiten Pumpenraum 132 zu fördern. Führt die dritte Rohrleitung 91 zurück zum Tank 3, so kann über den zweiten Pumpenraum 132 das Fluid zirkulieren. Dadurch kann zum einen der von der Drehkolbenpumpe 1 über die zweite Rohrleitung 9 geförderte Fluidvolumenstrom gesenkt werden, zum anderen kann feststoffbeladenes Fluid in dem Tank 3 durchmischt werden. Ein Mischen bzw. Rühren von feststoffbeladenem Fluid ist von großem Nutzen bei dem Ziel, einen gesamten Tankinhalt bei homogener Fluidzusammensetzung am Verwendungsort, z.B. auf einem großen Acker, auszubringen. Bei feststoffbeladenem Fluid besteht sonst in Abhängigkeit der Ansaugposition am Tank die Gefahr, dass über die Zeit der Feststoffanteil im ausgebrachten Fluid stark zu- oder abnimmt.

Erfindungsgemäß strömt beim Befüllen des Tanks 3 bei geöffnetem Ventil 80 und geschlossenem Ventil 81 Fluid über eine Ansaugleitung 92 in die erste Rohrleitung 8 und in den ersten und zweiten Pumpenraum 131, 132. Von dem ersten Pumpenraum 131 wird das Fluid in der Hauptsache bei geöffnetem Ventil 82 und geschlossenen Ausbringventilen 83, 84 über die zweite Rohrleitung 9 in den Tank 3 gefördert. Ein gewisser Anteil des geförderten Fluidvolumenstroms wird über den zweiten Pumpenraum 132 und die dritte Rohrleitung 91 ebenfalls in den Tank 3 gefördert, so dass die volle Förderleistung der Drehkolbenpumpe 1 ausgenutzt wird. Ein ausreichend schnelles Befüllen des Tanks bei niedriger Drehzahl einer Nebenabtriebswelle eines Schleppfahrzeugs ist daher möglich.

Beim Ausbringen des Fluids am Verwendungsort kann ein Schleppfahrzeug auch bei voller Motorleistung betrieben werden, ohne dass der Fluidvolumenstrom zu hoch wird, da der Fluidvolumenstrom bei geschlossenem Ventil 80 und geöffnetem Ventil 81 über eine Tanksaugleitung 93 den Pumpenräumen 131, 132 zugeführt wird und ein gewisser Anteil des Fluidvolumenstroms über den zweiten Pumpenraum 132 und die dritte Rohrleitung 91 zurück in den Tank 3 gefördert wird. Der bei geschlossenem Ventil 82 und geöffneten Ausbringventilen 83, 84 über Ausbringleitungen 94, 95 ausgebrachte Fluidvolumenstrom kann also dennoch ausreichend niedrig gehalten werden, unabhängig davon, ob ein Reduziergetriebe vorgesehen wird oder nicht. Ferner wird das Fluid, insbesondere feststoffbeladenes Fluid im Tank 3 durch die Rezirkulation über die Leitung 91 gut durchmischt.

Führt die dritte Rohrleitung 91 zurück zum Tank 3, so ist der zweite Pumpenraum 132 vorzugsweise je nach Auslegung der Pumpe dazu ausgebildet, einen im Vergleich zum von dem ersten Pumpenraum 131 der Drehkolbenpumpe 1 zu fördernden Fluidvolumenstroms kleineren oder größeren Fluidvolumenstrom über den zweiten Pumpenraum 132 zu fördern und damit zirkulieren zu lassen.

### Bezugszeichenliste

- 1: Drehkolbenpumpe
- 2: Zugdeichsel
- 22: Querstrebe
- 3: Tank
- 31: Tankwagen
- 4, 5: saug- bzw. druckseitiges Fluidspeichervolumen
- 44, 55: saug- bzw. druckseitige Anschlussöffnungen
- 6, 7: Ein- bzw. Ausströmbereich
- 8, 9: erste und zweite Rohrleitung
- 91: dritte Rohrleitung
- 10: Antriebsflansch
- 11: Winkelgetriebe
- 121, 122: Drehkolben
- 123, 124: Drehkolben
- 13: Pumpenraum
- 131; 132: erster und zweiter Pumpenraum
- 14: Pumpengehäuse
- 15: oberseitiger Flansch
- 16: unterseitiger Flansch
- 17: oberseitiger Deckel
- 18: unterseitiger Deckel

## Patentansprüche

1. Drehkolbenpumpe (1) für einen Tankwagen (31), insbesondere für in der Landwirtschaft anfallende feststoffbeladene Fluide, aufweisend einen mit einer horizontal verlaufenden Gelenkwelle eines Schleppfahrzeuges verbindbaren, um eine in Einbaulage horizontal verlaufende Achse drehbaren Antriebsflansch (10), mindestens ein Paar zusammenwirkender Drehkolben (121, 122), von denen jedes Paar in einem Pumpenraum (13) angeordnet ist, der/die von einem Pumpengehäuse (14) umschlossen ist/sind, wobei jedes Paar mit dem Antriebsflansch (10) zur Übertragung eines Drehmoments gekoppelt ist, sowie an jedem Pumpenraum (13) ausgebildete erste (8) und zweite (9) Öffnungen im Pumpengehäuse, die mit dem jeweiligen Pumpenraum in Fluidkommunikation stehen, **dadurch gekennzeichnet, dass** jeder Drehkolben (121, 122) in Einbaulage der Drehkolbenpumpe (1) um eine vertikal ausgerichtete Drehachse drehbar im Pumpengehäuse (14) gelagert ist, wobei die Drehachse der Drehkolben eines Paares parallel und beabstandet zueinander verlaufen und zur Übertragung des Drehmoments von dem Antriebsflansch (10) auf die Drehkolben (121, 122) ein Winkelgetriebe (11), vorzugsweise ein insbesondere umschaltbares Reduzierwinkelgetriebe für optionales Untersetzen der Drehzahl ausgeführt ist bereitgestellt ist.

2. Drehkolbenpumpe nach Anspruch 1, **dadurch gekennzeichnet, dass** das Pumpengehäuse (14) zwei Anschlussöffnungen (44, 55) aufweist, wobei vor einer oder beiden Anschlussöffnungen (44, 55) außerhalb des Pumpengehäuses (14) vor der ersten und zweiten Rohrleitung (8, 9) Fluidspeichervolumina (4, 5) bereitgestellt sind.

3. Drehkolbenpumpe nach Anspruch 2, **dadurch gekennzeichnet, dass** ein Ein- bzw.
Ausströmbereich (6, 7) an den Fluidspeichervolumina (4, 5) vorgesehen ist, wobei der Ein- bzw. Ausströmbereich (6, 7) der Fluidspeichervolumina (4, 5) in einem in Schwerkraftrichtung oben liegenden Bereich, insbesondere der in Schwerkraftrichtung oben liegenden oberen Seite der Fluidspeichervolumina (4, 5) angeordnet ist, und wobei die erste und zweite Rohrleitung (8, 9) über den Ein- bzw. Ausströmbereich (6, 7) der Fluidspeichervolumina (4, 5) an den Pumpenraum (13) gekoppelt sind.

4. Drehkolbenpumpe nach Anspruch 1, **dadurch gekennzeichnet, dass** das Pumpengehäuse (14) einen oberseitigen Flansch (15) und einen unterseitigen Flansch (16) aufweist, wobei die Flansche (15, 16) identische Abmessungen in Bezug auf Befestigungsmittel und Dichtungsmittel haben und dass vorzugsweise die Drehkolben (121, 122) in Deckeln (17, 18) gelagert sind, wobei die Deckel (17, 18) über die Flansche (15, 16) an das Pumpengehäuse (14) gekoppelt sind und vorzugsweise das Winkelgetriebe (11) mit dem antriebsseitigen Deckel (17; 18) gekoppelt ist, wobei der antriebsseitige Deckel (17; 18) mit dem oberseitigen Flansch (15) oder dem unterseitigen Flansch (16) gekoppelt ist und die Drehkolben (121, 122) vorzugsweise vertikal nach oben demontierbar sind.

5. Drehkolbenpumpe nach Anspruch 4, **dadurch gekennzeichnet, dass** bei oberhalb des Pumpengehäuses (14) angeordnetem Winkelgetriebe (11) das Winkelgetriebe (11) zusammen mit dem oberseitigen Deckel (17) und den Drehkolben (121, 122) als ein einziges zusammenhängendes Pumpenelement vertikal nach oben demontierbar ist.

6. Drehkolbenpumpe nach einem der vorhergehenden Ansprüche oder nach dem Oberbegriff des Anspruchs 1, **dadurch gekennzeichnet, dass** die Drehkolbenpumpe (1) einen ersten und einen zweiten Pumpenraum (131; 132) aufweist, wobei in jedem Pumpenraum ein entsprechend erstes und zweites Paar von Drehkolben angeordnet ist, und die Paare mechanisch miteinander gekoppelt sind und dass vorzugsweise der zweite Pumpenraum (132) kleiner ist als der erste Pumpenraum (131).

7. Drehkolbenpumpe nach Anspruch 6, **dadurch gekennzeichnet, dass**
der erste und zweite Pumpenraum (131; 132) jeweils eine erste Öffnung aufweisen, die miteinander in Fluidkommunikation stehen und ausgebildet sind, um mit einer ersten Rohrleitung (8) verbunden zu werden,
der erste Pumpenraum (131) einen zweite Öffnung aufweist, die ausgebildet ist, um mit einer zweiten Rohrleitung (9) verbunden zu werden, und
der zweite Pumpenraum (132) eine zweite Öffnung aufweist, der ausgebildet ist, um mit einer dritten Rohrleitung (91) verbunden zu werden.

8. Drehkolbenpumpe nach Anspruch 7, **dadurch gekennzeichnet, dass** der zweite Pumpenraum (132) dazu ausgebildet ist, einen Teil des von der Drehkolbenpumpe (1) zu fördernden Fluidvolumenstroms vom ersten Pumpenraum (131) über den zweite Pumpenraum (132) und über die dritte Rohrleitung (91) zu fördern.

9. Drehkolbenpumpe nach einem der vorhergehenden Ansprüche 7-8, **dadurch gekennzeichnet, dass** die Drehachse eines Drehkolbens des Drehkolbenpaares des ersten Pumpenraums koaxial zu der Drehachse eines Drehkolbens des Drehkolbenpaares des zweiten Pumpenraums liegt und vorzugsweise die Drehachse des anderen Drehkolbens des Drehkolbenpaares des ersten Pumpenraums koaxial zu der Drehachse des anderen Drehkolbens des Drehkolbenpaares des zweiten Pumpenraums liegt.

10. Tankwagen (31) mit einem Tank (3) und einer Drehkolbenpumpe nach einem der vorhergehenden Ansprüche, insbesondere mit einer Deichsel (2), in deren Bereich die Drehkolbenpumpe angeordnet ist und mit dem Tank (3) des Tankwagens (31) in Fluidverbindung steht zum Befüllen des Tanks über eine Ansaugleitung und zum Ausbringen von Fluid aus dem Tank über eine Ausbringleitung.

11. Tankwagen (31) nach Anspruch 10 mit einer Drehkolbenpumpe (1) nach einem der Ansprüche 9-10,
**dadurch gekennzeichnet, dass** durch Schaltung zumindest eines Ventils
- in einer ersten Ventilstellung eine Austrittsöffnung des ersten Pumpenraums (131) in Fluidkommunikation mit dem Tank (3) steht und
- in einer zweiten Ventilstellung die Austrittsöffnung des ersten Pumpenraums (131) mit einer Rohrleitung zur Ausbringung des Fluids steht und vorzugsweise eine Austrittsöffnung des zweiten Pumpenraums (132) in Fluidkommunikation mit dem Tank (3) steht.

12. Tankwagen (31) nach Anspruch 11, **dadurch gekennzeichnet, dass**
in den für den bestimmungsgemäßen Einsatz der Drehkolbenpumpe (1) erforderlichen Fluidleitungen schaltbare Ventile oder Rückschlagventile solcherart angeordnet sind, dass
- in einer ersten Ventilstellung eine Ansaugleitung (8) mit den Einlassöffnungen des ersten und zweiten Pumpenraums (131; 132) in Fluidverbindung steht und die Auslassöffnungen des ersten und zweiten Pumpenraums in Fluidverbindungen mit dem Tank (3) stehen, um Fluid bei einer ersten Drehrichtung der Drehkolben (121, 122) der Drehkolbenpumpe (1) von der Ansaugleitung in den Tank zu fördern, und dass
- in einer zweiten Ventilstellung der Tank (3) über den ersten Pumpenraum (131) mit einer Rohrleitung zur Ausbringung des Fluids in Fluidverbindung steht und der Tank mit dem zweiten Pumpenraum (132) in einem Fluidkreislauf steht zum Ausbringen des Fluids aus dem Tank und gleichzeitigem Umwälzen des Fluids in dem Tank bei einer gegebenfalls von der ersten abweichenden Drehrichtung der Drehkolben (121, 122) der Drehkolbenpumpe (1).

13. Verfahren zur Wartung einer Drehkolbenpumpe (1) für einen Tankwagen (31), insbesondere für in der Landwirtschaft anfallende feststoffbeladene Fluide, aufweisend einen mit einer horizontal verlaufenden Gelenkwelle eines Schleppfahrzeuges verbindbaren, um eine in Einbaulage horizontal verlaufende Achse drehbaren Antriebsflansch (10), mindestens ein Paar zusammenwirkender Drehkolben (121, 122), von denen jedes Paar in einem Pumpenraum (13) angeordnet ist, der/die von einem Pumpengehäuse (14) umschlossen ist/sind, und jedes Paar mit dem Antriebsflansch (10) zur Übertragung eines Drehmoments gekoppelt ist, ein an das Pumpengehäuse (14) gekoppelter oberseitiger bzw. unterseitiger Deckel (17, 18), sowie mit dem Pumpenraum (13) verbundene erste (8) und zweite Rohrleitungen (9), ein Winkelgetriebe (11) sowie Fluidspeichervolumina (4, 5), **dadurch gekennzeichnet,**
**dass** die Drehkolben (121, 122) über den oberseitigen Deckel (17) durch vertikale Entnahme nach oben aus dem Pumpengehäuse (14) genommen werden, wobei die Drehkolben (121, 122) mit dem oberseitigen Deckel (17) und dem Winkelgetriebe (11) jeweils allein oder als ein einziges zusammenhängendes Pumpenelement vertikal demontiert werden.

14. Verfahren zur Wartung einer Drehkolbenpumpe nach einem der vorhergehenden Anspruch 1-9, **dadurch gekennzeichnet, dass** bei der Wartung das zu fördernde Fluid im Wesentlichen in dem Pumpengehäuse (14) und in den Fluidspeichervolumina (4, 5) verbleibt.

15. Verfahren zum Betrieb eines Tankwagens mit einer Drehkolbenpumpe
**dadurch gekennzeichnet, dass**
- in einem ersten Betriebszustand Fluid aus einer Ansaugleitung über beide Pumpenräume einer Doppelkammer-Drehkolbenpumpe in einen Tank des Tankwagens gefördert wird und
- in einem zweiten Betriebszustand Fluid aus dem Tank über einen der beiden Pumpenräume zu einer Ausbringleitung gefördert wird und Fluid aus dem Tank über den anderen der beiden Pumpenräume in den Tank rezirkuliert wird.
